# EUROPEAN PATENT APPLICATION

(11) **EP 4 541 859 A1**
(43) Date of publication of application: **23.04.2025**
(21) Application number: 24203845.3
(22) Date of filing: 01.10.2024
(51) Int. Cl.: C08L 97/00, C08L 61/06, B32B 29/00, C09J 161/06, C09J 197/00, D21H 17/46, D21H 27/30, C08G 8/24

(54) **LIGNIN-PHENOL-FORMALDEHYDE RESIN FOR IMPREGNATION OF KRAFT PAPER**

(30) Priority: 02.10.2023 FI 20236090
(71) Applicant: Prefere Resins Holding GmbH, 15537 Erkner (DE)
(72) Inventor: MONONEN, Pekka, Hamina (FI); JÄNIS, Marika, Hamina (FI); LINDGREN, Marko, Hamina (FI); LÖNNBLAD, Matias, Hamina (FI); LINGENFELTER, Peter, Hamina (FI)
(74) Representative: Laine IP Oy

(57) **Abstract**

According to an example aspect of the present invention, there is provided an impregnation resin mixture comprising lignin-phenol-formaldehyde resin and dimethyl sulfoxide (DMSO) as solvent. In particular, there is provided a kraft paper impregnated with such resin mixture. Further, there is provided a method for producing the impregnated kraft paper and an overlaid plywood thereof, as well as an overlaid plywood, a high-pressure laminate and a continuously pressed laminate comprising the kraft paper of the present invention.

## Description

### Background of the Invention

### Field of the Invention

The present invention concerns an impregnation resin, especially an impregnation resin mixture comprising a lignin-phenol-formaldehyde (LPF) resin and a solvent. In particular, the present invention concerns a method for impregnating kraft paper, or other suitable substrate, with such a resin mixture. Further, the present invention concerns a kraft paper, or other suitable substrate, impregnated with such a resin mixture or obtained by such a method.

The present invention also concerns the use of the impregnation resin and the impregnated kraft paper or other substrate thereof. In particular, the invention concerns an overlaid plywood, a high pressure laminate and a continuously pressed laminate comprising the impregnated kraft paper of the present invention.

### Description of Related Art

As with many other industries, also the wood panel industry and the related adhesive industry is currently actively working to decrease their carbon footprint by developing more sustainable products and technologies. When it comes to phenol-formaldehyde resins, used as adhesives and in phenolic overlay films used in the plywood industry, as well as in decorative laminates, one of the most effective ways to make the resin more sustainable is to replace fossil-based phenol with the renewable, bio-based polyphenolic compound, lignin.

In phenolic resins applied as adhesives, lignin has been used as a partial replacement for phenol at industrial scale for several years, but in the impregnated overlay film industry a similar replacement is not known to be used in mass production. The absence of available sustainable resin technology in the impregnation industry is mostly due to more challenging requirements for resin properties, especially impregnation capability.

Lignin is a big particle when it comes to molecular weight, and it is known that replacement of even a small share of phenol by lignin in the impregnation resin deteriorates the penetration capability of the resin into kraft paper, and makes industrial application difficult considering production efficiency and the demanding product properties required by the end-use on overlaid plywood and in laminates.

Demanding applications, such as concrete forming, exterior siding, transport vehicle/ truck trailer flooring and use in industrial containers, require tough building materials. Plywood as such is not suitable, and thus overlaid plywood having a coating on the surface, i.e. an overlay film, is necessary. Typically, overlaid plywood is made by applying a thermosetting resin coating on one or both sides of the plywood, which makes the plywood more stable, durable and weather-resistant. Thus, overlaid plywood combines the strength and toughness of exterior-grade plywood with the superior wear of an overlaid surface. Such resin impregnated films are also sometimes referred to as prepregs.

Overlaid plywood is mainly used for outdoor applications, but it can also be used for indoor furniture and structures because of its moisture- and scratch-resistance.

Typically, overlaid plywood have highly durable, resin-impregnated, fiber-reinforced surfaces. In particular, the surface of the overlaid plywood is formed by a resin impregnated film forming a tough surface aiming to resist abrasion, moisture penetration, chemicals and deterioration. Yet, overlaid plywood retains plywood's advantages, such as high strength to weight ratio, dimensional stability and rack resistance, as well as plywood's design flexibility.

Melamine-formaldehyde, melamine-urea-formaldehyde or phenol formaldehyde resins are typically used in manufacturing of overlaid plywoods, as an adhesive between veneers in plywood manufacturing, and also in the manufacturing of overlay films, typically made of kraft paper saturated with a suitable resin. Phenolic resin is highly compatible with wood based products and will quickly penetrate into and wet-out cellulose fibers in its liquid state, then cross-link and harden when being thermoset under heat and pressure. The immediate benefits being high mechanical strength, chemical moisture and heat resistant properties. However, the availability of petrochemical raw materials, such as phenol, is limited and it would be important to replace them with renewable natural raw materials, such as lignin, which is obtained from wood and possesses a polyphenolic structure. At the same time, the adverse environmental impacts caused by phenol would be avoided.

However, lignin-phenol-formaldehyde (LPF) resins do not penetrate into kraft paper well enough to achieve the required performance for the end-product (overlaid plywood), nor is the penetration fast enough with respect to normal running speed of typical continuous impregnation process. Thus, LPF resins have not been utilized in paper impregnation for surface film / overlay film manufacturing.

Improved impregnation properties of LPF resins would also be desired in other impregnation applications, such as for high pressure laminates (HPL), continuously pressed laminates (CPL), adhesive films for thin veneer plywood, or in combination with other substrates such as wood (in the case of impregnated wood), synthetic, glass or carbon fiber mats and nonwovens for a variety of end applications.

Thus, there is still a clear need for improved LPF-resins and for a more optimal solution for impregnating different substrates, in particular kraft paper that is especially suitable to be used in overlaid plywood.

### Summary of the Invention

The present invention aims at solving at least some of the problems of the prior art.

It is an object of the present invention to provide an impregnation resin, in particular an impregnation resin mixture comprising a lignin-phenol-formaldehyde (LPF) resin and a solvent. The solvent is selected from a group of solvents capable of acting as an impregnation agent, i.e., an agent that contributes to the impregnation capability of the lignin-containing resin.

It is another object of the present invention to provide a method for impregnating kraft paper with the resin mixture of the present invention.

It is a third object of the present invention to provide a kraft paper impregnated with the above resin mixture or obtained by the above method.

It is a fourth object of the present invention to use the impregnated kraft paper in an overlaid plywood, a high pressure laminate, a continuously pressed laminate or an adhesive film.

It is a fifth object of the present invention to use the impregnation resin according to the present invention in impregnation of also other substrates than kraft paper.

Thus, the present invention concerns an impregnation resin mixture comprising a LPF resin and a solvent, the solvent being selected from the group of dimethyl sulfoxide (DMSO), dimethyl formamide (DMF), 2-methoxyethanol, diethylene glycol monobutyl ether (butyl carbitol), 1-methoxy-2-propanol and mixtures thereof.

1-methoxy-2-propanol is also known by names such as 1-methoxypropan-2-ol, propylene glycol methyl ether (PGME), methoxypropanol, α-propylene glycol monomethyl ether and CAS 107-98-2, and it is sold for example by a trade name Dowanol^{™} PM.

In particular, the present invention concerns a method for impregnating kraft paper with such resin mixture. The method comprises the steps of providing the resin mixture and impregnating a kraft-paper with the resin mixture. The solvent can be present already during the polymerization of the LPF resin or it can be added to already polymerized LPF resin. Such method can also be applied on other substrates.

The kraft paper obtained by impregnating with the resin mixture of the present invention is especially suitable to be used as an overlay on plywood to provide an overlaid plywood. Thus, the present invention also concerns an overlaid plywood comprising a plywood having the impregnated kraft paper being pressed on the surface of the plywood.

The kraft paper of the present invention is also suitable to be used in high pressure laminates and continuously pressed laminates, as well as in adhesive films. Thus, the present invention also concerns a high-pressure laminate and a continuously pressed laminate, both comprising at least two sheets of the impregnated kraft paper being pressed together.

The present invention is based on the idea that the solvent improves impregnation capability of LPF resin, especially into a kraft paper but also into other substrates. Without being bound by a theory, the solvent of the present invention enables remaining lignin of the resin mixture in such a form, preferably in dissolved form, that it can be impregnated into a kraft paper and/or the solvent acts as a carrier or auxiliary agent for lignin during the impregnation. Thus, the present invention concerns LPF resin, the impregnation capability of which is improved by a suitable solvent. Especially, such resin mixture is suitable to be used as an impregnation resin for kraft paper. Thus, the present invention provides a solvent-assisted impregnation of LPF resin into kraft paper. In particular, the present invention enables faster and more uniform distribution of the LPF resin into a kraft paper.

More specifically, the resin mixture, the method, the kraft paper, the overlaid plywood, the high-pressure laminate and the continuously pressed laminate according to the invention are mainly characterized by what is disclosed in the independent claims.

Considerable benefits are achieved with the present invention. First of all, the present invention provides an improved LPF resin mixture having an improved impregnation capability. In particular, the present invention provides an improved method of impregnating kraft paper with LPF resin in conventional impregnation process, wherein the LPF resin is more efficiently and more uniformly impregnated into a kraft paper of all grammages. Wetting and impregnation properties as well as penetration capability and uptake of LPF resin are improved by the present invention. This can be observed visually from the uniform appearance of impregnated kraft paper without any local areas with low resin content, as well as from the clearly faster wetting and penetration into the paper.

In particular, the invention provides improved LPF resin impregnated kraft papers to be used as overlay films in the plywood industry. Due to improved, more perfect impregnation/ resin uptake capability gained from utilizing the resin mixture of the present invention, typical properties of traditional PF-overlays, such as wetting time, reactivity (pressing time) and alkali resistance, can be achieved with an LPF-overlay. Thus, the impregnation of kraft paper with such a solvent-modified LPF resin is also fast enough to meet typical running speed requirements of continuous impregnation machines.

Such LPF resin-impregnated kraft papers are also suitable to be used as impregnated papers used in manufacturing of high-pressure laminates and continuously pressed laminates, as well as adhesive films for thin veneer plywood manufacturing.

Thus, the present invention enables uniform impregnation of kraft paper resulting in end-products, such as overlay and laminate, that are comparable with products made with traditional phenol-formaldehyde (PF) resins.

The present invention also enables impregnation of other substrates for various applications. The present impregnation resin is for example also suitable to be used a binder in filter media for filtration.

### Brief description of the drawings

Figure 1 shows the overlaid plywoods of Example 3.
Figures 2 to 4 show the boat test results of Example 4.
Figure 5 shows the overlaid plywoods of Example 5.
Figures 6-11 show the boat rest results of Example 6.
Figures 12 to 17 show the boat test results of Example 7.
Figure 18 shows the boat test results of film kraft paper of Example 8.
Figure 19 shows the boat test results of lamination kraft paper of Example 8.

### Embodiments

In the present context, percentages refer to percentages by weight, unless otherwise stated.

The present invention concerns a method to improve impregnation properties of lignin-phenol-formaldehyde (LPF) resin especially into kraft paper that can for example be applied as an overlay film used in plywood industry, and utilized in decorative laminates, such as high pressure laminates (HPL) and continuously pressed laminates (CPL), and in adhesive films used in gluing process of thin veneer plywood.

In particular, the present invention relates to a resin mixture, in particular impregnation resin mixture, comprising a lignin-phenol-formaldehyde (LPF) resin and a solvent. The solvent is selected such that it contributes to improved impregnation capability of the lignin-containing resin mixture, and is therefore acting as an impregnation agent.

The resin mixture of the present invention can also be used in combination with other substrates, such as wood (in the case of impregnated wood), synthetic, glass or carbon fiber mats and nonwovens for a variety of end applications.

According to one embodiment, the LPF resin mixture is any resin comprising a polymerization product of lignin, phenol and formaldehyde. LPF resins and their production methods are known in the art. In one embodiment, the LPF resin of the present invention can be produced by any known method.

The LPF resin can comprise from 10 wt.%, 15 wt.%, 20 wt.%, 25 wt.%, 30 wt.%, or 35 wt.% up to 25 wt.%, 35 wt.%, 40 wt.%, 45 wt.%, 50 wt.%, 60 wt.% or 70 wt.% of lignin, calculated from the total dry weight of lignin and phenol in the LPF resin. Thus, the LPF resin can comprise, for example, 10 to 25 wt.%, 20 to 35 wt.%, or 30 to 45 wt.% of lignin. Replacement of phenol with lignin in such amounts can provide for versatile impregnation resins, which are comparable to conventional phenol-formaldehyde resins in terms of, for example, reactivity and uniformity of the impregnation in kraft paper, and alkali resistance of the film made of such resin, in particular in the presence of DMSO.

According to one embodiment, the LPF resin comprises at least 10 wt. %, such as at least 20 wt.%, preferably 20 to 70 wt.%, such as 30 to 70 wt.%, more preferably 30 to 50 wt.%, such as 35 to 50 wt.%, of lignin, calculated from the total dry weight of lignin and phenol in the LPF resin. Thus, the phenol of conventional phenol-formaldehyde resin is preferably replaced with lignin in such amounts. The preferred ranges as disclosed above are beneficial in terms of a relatively high share of lignin, which reduces the need to include fossil-based phenol, still showing an impregnation capability sufficient for the impregnation of kraft paper, as well as meeting technical performance expectations of the end product for use in, for example, laminate products and as overlay films.

According to a preferred embodiment, the solvent is selected from the group of dimethyl sulfoxide (DMSO), dimethyl formamide (DMF), 2-methoxyethanol, diethylene glycol monobutyl ether (butyl carbitol), 1-methoxy-2-propanol and mixtures thereof. In a particular embodiment, the solvent is DMSO. DMSO is a good solvent for lignin, and carries no hazard indications.

In the impregnation resin mixture, i.e., the LPF resin of the present disclosure, the solvent, in particular DMSO, interacts with the other components of the resin and/or the substrate, and contributes to improved impregnation capability of the resin. The function of the solvent is thus not only to dilute the impregnation resin or to lower the viscosity thereof, but the solvent itself acts as an impregnation agent, facilitating transfer of the LPF resin into the substrate, such as kraft paper. In tests carried out in the context of the present disclosure, it was observed that the impregnation capability of the resin was significantly improved in the presence of DMSO when compared to resins without DMSO and comprising the same amounts of traditional solvents, such as methanol. The improved impregnation results can be attributed to DMSO acting as a solvent for lignin, as a carrier, and/or as an activator of the substrate, all of which individually or together allows for the LPF resin to penetrate into the substrate, in particular into kraft paper.

The solvent can be in the resin mixture in reacted or unreacted form. Thus, in one embodiment the solvent can be present as an additional component as such or it can be reacted with the LPF resin. According to one embodiment, this is mainly affected by at which stage of the production method of the resin mixture the solvent is added.

The resin mixture preferably comprises 0.1 to 10 wt.% of the solvent(s), calculated from the total weight of the resin mixture. In particular, the resin mixture comprises 0.1 to 10 wt.%, preferably 1 to 6 wt.%, such as 2 to 5 wt.% of the solvent(s), especially DMSO, calculated from the total weight of the resin mixture. A concentration of 1 to 6 wt.% of DMSO in the impregnation resin provides for a good balance between impregnation capability of the resin and cost efficiency.

Thus, according to one embodiment, the present invention concerns an impregnation resin mixture comprising a lignin-phenol-formaldehyde (LPF) resin and 0.1 to 10 wt.% of a solvent selected from the group of dimethyl sulfoxide (DMSO), dimethyl formamide (DMF), 2-methoxyethanol, diethylene glycol monobutyl ether (butyl carbitol), 1-methoxy-2-propanol and a mixtures thereof, calculated from the total weight of the resin mixture, wherein the solvent is in reacted or unreacted form.

The solvent can be selected independently of each other from the above group of solvents. Preferably the solvent is DMSO, optionally in combination with one or more further solvent.

The above-mentioned solvents have been found to contribute to the impregnation capacity of the LPF resin. Thus, the impregnation resin can comprise DMF as solvent. In some embodiments the impregnation resin can comprise 2-methoxyethanol as solvent. In some further embodiments, the impregnation resin can comprise diethylene glycol monobutyl ether (butyl carbitol) as solvent. In still some further embodiments, the impregnation resin can comprise 1-methoxy-2-propanol as solvent. Particularly good impregnation results are achieved with DMSO as solvent, as well as with combinations of DMSO and one or more further solvent disclosed herein, such as DMSO and 1-methoxy-2-propanol.

According to one embodiment, the resin mixture also comprises an additive or additives. Additives can be used to further modify properties of the resin mixture. The additive(s) is preferably selected from the group of levelling agent, release agent, defoamer /antifoaming agent, antiblocking agent, dye/pigment, accelerator, plasticizer, surfactant/wetting agent, hydrophobic agent, and mixtures thereof.

According to one embodiment, the dry matter content of the resin mixture is in the range of 30 to 80 wt.%, preferably in the range of 40 to 70 wt.%, such as in the range of 47-55 wt.%, calculated from the total weight of the resin mixture.

The impregnation resin mixture of the present invention is especially suitable for impregnating kraft paper. Any kraft paper can be used in the present invention, thus both low and high grammage kraft papers are suitable for the present invention. Kraft paper typically has a grammage of 40 to 250 g/m2. Further, the impregnation resin mixture of the present invention is suitable for impregnating kraft papers used in (manufacturing of) both overlay films and laminates.

One advantage is thus that the LPF resin of the present disclosure can be used for technically successful impregnation of different kinds of kraft paper used in different applications, including impregnated kraft papers applied as overlay films. Such overlay films generally require a much higher resin content, such as at least 60 wt.% (calculated from the total weight of the dried, resin impregnated paper), to achieve desired technical performance as compared to impregnated papers used in laminates, that typically have resin content of up to 35%. The LPF resin of the present invention shows an impregnation capability that allows for the production of such overlays as well as products comprising overlays based on kraft paper, such as overlaid plywood.

Thus, the present invention also concerns a method for impregnating kraft paper with a resin mixture. The method comprises the steps of providing a resin mixture and impregnating a kraft paper with the resin mixture.

In particular, the kraft paper is impregnated with the resin mixture of the present invention. Thus, all the above described embodiments also relate to the method of the present invention. In one embodiment, the method comprises the steps of providing a resin mixture and impregnating a kraft paper with the resin mixture, wherein the resin mixture comprises a lignin-phenol-formaldehyde (LPF) resin and 0.1 to 10 wt.% of solvent selected from the group of dimethyl sulfoxide (DMSO), dimethyl formamide (DMF), 2-methoxyethanol, diethylene glycol monobutyl ether (butyl carbitol), 1-methoxy-2-propanol and mixtures thereof, calculated from the total weight of the resin mixture, wherein the solvent is in reacted or unreacted form.

The method of the present invention comprises the first step of providing the resin mixture, the resin mixture comprising a LPF resin and a solvent. The LPF resin is produced by any known method. In particular, the LPF resin is produced by polymerizing lignin and phenol with formaldehyde. Typically, LPF resin production comprises the steps of mixing together lignin, phenol, water and a catalyst, and then adding formaldehyde thereto. The polymerization reaction is preferably initiated by heating the mixture.

According to one embodiment alkaline or acidic catalyst can be used. Preferably the catalyst is alkaline, such as sodium hydroxide (NaOH).

The solvent can be added before, during or after the polymerization reaction.

According to one embodiment, the resin mixture is provided by polymerizing lignin and phenol with formaldehyde in the presence of the solvent of the present invention, preferably DMSO. Thus, the solvent can already be present during the polymerization reaction. Without being bound by a theory, it might be that the solvent at least partially reacts with lignin, phenol and/or formaldehyde during the polymerization, wherein the solvent may be in reacted form in the resin mixture.

In one embodiment, the resin mixture is provided by first mixing together lignin, phenol, the solvent, water and a catalyst, and then adding formaldehyde thereto for polymerization.

According to one embodiment, the solvent is added before, during or after addition of formaldehyde. Preferably, the solvent still being added before the polymerization reaction.

The polymerization is typically considered to be started once the temperature of the mixture of the components is raised above 45 °C, in particular once the temperature has reached a temperature of at least 65 °C, such as temperature in the range of 65 to 99 °C. In one embodiment, the temperature of the mixture is raised in order to start the polymerization by applying external energy, by the exothermic heat originating from the addition of formaldehyde or by the combination of both of these energy sources. In a preferred embodiment, the temperature of the mixture is raised by heating with an external energy source.

Thus, in one embodiment, the solvent is added to the mixture of lignin, phenol, water and catalyst before, during or after formaldehyde but before the polymerization reaction occurs, i.e. preferably before the temperature of the mixture is raised above 45 °C, or at least before the temperature of the mixture is raised above 65 °C.

According to one embodiment, the solvent is added to a ready-made, i.e. polymerized, LPF resin. Thus, the solvent is added only after the polymerization reaction. Without being bound by a theory, the solvent then remains in unreacted form in the resin mixture.

Thus, in one embodiment, the method of the present invention comprises all the basic steps of LPF resin production and its impregnation into kraft paper combined with a new separate step of adding an additional solvent, preferably DMSO, into a ready-made resin mixture prior to the impregnation step.

In one embodiment, the solvent is mixed with the ready-made LPF resin right after the polymerization has reached a desired stage (determined by methods like viscosity of the LPF resin, molar mass, condensation time, water tolerance or concentration of free residual monomers) and/or after the cooling phase of the LPF resin has started.

In another embodiment, the solvent is mixed with ready-made LPF resin afterwards, i.e. after cooling of the LPF resin, especially after some intermediate step(s), such as storage. Thus, in one embodiment, the solvent is mixed with the LPF resin after the manufacturing process of the LPF resin has been completed and the LPF resin has been cooled down to a storage temperature, at the latest immediately before the impregnation process.

According to one embodiment, a kraft paper is then impregnated with the resin mixture. Impregnation can be performed by any known impregnation method. Typically, the impregnation process comprises an impregnation step and a drying step. In the impregnation step the resin mixture is applied in liquid form onto the paper and allowed to penetrate into the paper, whereas in the drying step the resin mixture is heated in order to solidify the resin, however, without necessarily fully curing it.

In one embodiment, a kraft paper is impregnated with the resin mixture in a process in which a liquid resin mixture together with a possible additive(s) (such as releasing agents, wetting agents, anti-foaming agents, leveling agents, hydrophobic agents, pigments, UV-stabilizators, softeners, hardeners, reactivity accelerators, etc) are first mixed together and then impregnated, preferably in a continuous process, into a kraft paper. Then the resin-impregnated wet paper is dried, preferably in a heated chamber, preferably at a temperature in the range of 120-180 °C, so that most, preferably at least 80 weight-% (calculated from the total weight of the resin mixture), of the water and other volatile components are removed from the film by evaporation resulting in a touch-dry film, i.e. at least essentially dry film, optionally having a moisture content of up to 10 wt.%, calculated from the total weight of the dried film. In a preferred embodiment, the drying stage is done in a way that the resin still maintains its capability to liquefy/flow again later when heat and pressure is optionally applied for example in plywood overlaying process, i.e. the resin will not become fully cured in this phase, in spite of the heat in the drying process. This not fully cured stage of the resin is generally called B-stage in the impregnation process, the fully cures stage being referred as C-stage. According to one embodiment, the amount of volatile components, i.e. water and other volatile components, in the dried film (in B-stage) is at least 5 wt.%, and preferably up to 9 wt.%, such in the range of 5 to 9 wt.% or in the range of 6 to 8 wt.%, calculated from the total weight of the dried film.

Further, the present invention concerns a method of manufacturing an overlaid plywood, the method comprising the steps of providing a kraft-paper impregnated with a resin mixture, providing a plywood and pressing the impregnated kraft-paper on the surface of the plywood. In particular, the kraft-paper impregnated with a resin mixture is obtained by the method of the present invention, i.e. the method for impregnating kraft paper with a resin mixture described above. As being described above, in a preferred embodiment, in particular the drying step of the impregnated resin mixture in the context of the overlaid plywood is performed in a way that the resin will not become fully cured but can be further cured on the surface of the plywood upon pressing, and preferably heating.

According to one embodiment, the impregnated kraft paper is pressed at an elevated temperature, preferably at a temperature in the range of 120 to 200 °C, on the surface of the plywood. In a preferred embodiment, a pressure of about 18 to 26 bars is used. Under heat and pressure the resin continues curing and reaches the fully cured stage. The curing time depends on reactivity of the resin and pressing conditions.

The plywood can be any known plywood manufactured by known methods. In general, plywood is a composite material manufactured from thin layers, or plies, or wood veneer that are glued together with adjacent layers. The impregnated kraft paper is pressed, in particularly hot-pressed, onto the surface of the plywood, wherein an overlaid plywood is provided.

The overlaying step of plywood, i.e. the step of pressing the impregnated kraft paper onto the surface of the plywood, can take place at any time after the manufacturing of the impregnated kraft paper. Thus, the impregnated kraft paper can be applied and pressed onto the surface of the plywood right after its manufacture, or there can be some intermediate steps, such as storing in between. Typically, the impregnated kraft paper is set on the surface of a plywood panel at the latest not exceeding 6 months storage time.

The present invention also concerns a kraft paper impregnated with the resin mixture of the present invention as well as an impregnated kraft paper obtained by the method of the present invention.

Such impregnated kraft paper can also be called a prepreg. The resin content of the prepreg can be chosen based on the intended end use, and can, for example, be from 25 wt.% up to 70 wt.%, calculated based on the dry weight of the prepreg. Thus, the dry content of resin in the prepreg corresponds to the increase in weight of the dry prepreg when compared to the weight of the dry kraft paper prior to impregnation.

According to one embodiment, the dry weight of the prepreg is about two to three times the grammage of a dry kraft paper, i.e. if the grammage of a dry paper is for example 80 g/m², total weight of impregnated and dried paper is then about 160 to 240 g/m², the exact resin content depending on application, the resin content typically being higher in overlay films and lower in laminates.

In some embodiments the dry resin content of the impregnated kraft paper is at least 50 wt.%, such as at least 60 wt.%, calculated from the total weight of the impregnated and dried kraft paper. In such embodiments, the dry resin content of the impregnated kraft paper can be, for example, up to 70 wt.%, calculated based on the dry weight. A resin content within said range is in particular preferable in impregnated kraft paper for use as overlay films, such as in overlaid plywood, without being limited thereto.

In further some embodiments, the dry resin content is up to 40 wt.%, such as up to 35 wt.%, calculated from the total weight of the kraft paper impregnated with resin. In such embodiments, the dry resin content of the impregnated kraft paper can be, for example, at least 25 wt.%, calculated based on the dry weight. A resin content within said range is in particular preferable in impregnated kraft paper for use in laminates, such as high-pressure laminates and continuously pressed laminates, without being limited thereto.

The impregnated kraft paper of the present invention can be used as a film in producing overlaid plywood or in producing laminates.

Thus, the present invention also concerns an overlaid plywood having the impregnated kraft paper of the present invention being pressed onto the surface of a plywood, as well as the overlaid plywood obtained by the method of the present invention.

Further, the present invention concerns a high-pressure laminate (HPL) and a continuously pressed laminate (CPL), both comprising at least two sheets of the kraft paper of the present invention being pressed together. HPL and CPL of the present invention are produced under typical HPL/ CPL pressing conditions.

According to one embodiment, the HPL is produced in discontinuously operating multi-daylight press with a pressure between 50 to 90 bar and preferably at a temperature of over 120 °C. The pressing time in the HPL process is typically 20 to 60 minutes. However, the present invention is applicable also to short cycle pressed HPL. CPL, in turn, is typically produced in a continuous double belt process with a pressure in the range of 30 to 70 bar, and a temperature preferably in the range of 150 to 170 °C. The pressing time of CPL process preferably being only 8 to 15 seconds. The resin mixtures used for manufacture of CPLs typically comprise also a melamine component, which allows use of a hardener, wherein the reactivity of the resin can be fine-tuned.

According to one embodiment, the HPL thin laminates have a thickness in the range of 0.5 to 2 mm, whereas the CPL has thickness in the range of 0.15 to 1.5 mm. In one embodiment, also compact laminates (much thicker) can be made especially from HPL.

Overall, the resin mixture of the present invention can be applied in various applications.

According to the one embodiment, the resin mixture of the present invention can be used a binder in filter medium used for filtration. In general, filter media is used to remove undesirable materials from a liquid or gas by passing the liquid or gas through the filter medium. It is known to produce filter mediums comprising a substrate layer and a resin binder. The resin mixture of the present invention can be used as such resin binder.

Thus, the present invention also concerns a filter medium comprising a substrate and a resin binder comprising the resin mixture of the present invention. In a preferred embodiment the substrate comprises 10 to 1000 wt.% of natural fibers, calculated from the total weight of the substrate.

Also other substrates than kraft paper can be impregnated with the resin mixture of the present invention.

Thus, the present invention also concerns a method for impregnating other substrates than kraft paper with a resin mixture. In particular, the substrate is impregnated with the resin mixture of the present invention. Thus, all the above described embodiments can be applied also in context of other substrates than kraft paper.

According to one embodiment, the substrate can be any substrate, in particular any substrate comprising cellulosic fibers, organic/ synthetic fibers, inorganic fibers or a mixture thereof. Thus, the substrate can be for example wood, or a fiber mat or a nonwoven substrate comprising synthetic, glass or carbon fibers.

In one embodiment, the substrate comprises 10 to 100 wt.% of natural fibers and 0 to 90 wt.% of synthetic and/or inorganic fibers, calculated from the total weigh of the substrate. According to one embodiment, the synthetic fibers can be for example polyester fibers.

The following non-limiting examples represent applications of the present technology.

### EXAMPLES

### Example 1: Production of the resin mixture - pre-addition of the solvent

First, water (l), lignin (s), phenol (aq.), DMSO (l) and NaOH (aq, 50 %) were mixed in a reactor at a room temperature, wherein solid material, i.e. lignin, was dissolved. In the mixture, 40 wt.% of phenol of a conventional PF resin was replaced with lignin and the amount of DMSO was 5 wt.%, calculated from the total weight of the mixture. The obtained mixture was then heated to a temperature of over 45 °C, which after addition of formaldehyde (aq, i.e. formalin) was started. During the addition of formalin, the temperature of the mixture was raised to a temperature of over 70 °C, and held at that temperature during the occurring condensation polymerization reaction between lignin, phenol and formaldehyde. Stage of the condensation polymerization reaction was followed by measuring the change of viscosity of the mixture. After reaching a specified viscosity value, preferably Brookfield viscosity in the range of 50 to 100 mPas (at 20 °C), the polymerization reaction was stopped by rapid cooling of the mixture. The mixture was cooled down to a desired storage temperature, below 25 °C.

### Example 2: Production of the resin mixture - post-addition of the solvent

First, water (l), lignin (s), phenol (aq) and NaOH (aq, 50 %) were mixed in a reactor at a room temperature, wherein solid material, i.e. lignin, was dissolved. In the mixture, 40 wt.% of phenol of a conventional PF resin was replaced with lignin and the amount of DMSO was 5 wt.%, calculated from the total weight of the mixture. The obtained mixture was then heated to a temperature of over 45 °C, which after addition of formaldehyde (aq, i.e. formalin) was started. During the addition of formalin, the temperature of the mixture was raised to a temperature of over 70 °C, and held at that temperature during the occurring condensation polymerization reaction between lignin, phenol and formaldehyde. Stage of the condensation polymerization reaction was followed by measuring the change of viscosity of the mixture. After reaching a specified viscosity value, the polymerization reaction was stopped by rapid cooling of the mixture. The mixture was cooled down to a desired storage temperature, below 25 °C. After cooling, DMSO (l) was mixed with the obtained resin.

### Example 3: Impregnation of kraft paper with the resin mixture and an overlaid plywood thereof

The resin mixtures of Example 1 and Example 2 were applied on a kraft paper (having a grammage of ca. 80 g/m²) and drying was performed by heating the paper to a temperature of 135°C for 2,5 minutes. Also, a reference sample was produced by impregnating a kraft paper with a resin mixture of Example 2 without the DMSO (i.e. conventional LPF resin), and subsequently drying the kraft paper.

The reference resin impregnated poorly into the kraft paper. It took more than 10 minutes of exposure to the resin in the first wetting phase for the upper surface of the paper to look wet, and even then there were areas where there was an observable lack of resin. The resins according to the present invention demonstrate significantly shortened wetting times, and also an almost perfect degree of wetting. It took less than 5 minutes to observe that the upper surface of the paper is completely wetted.

The impregnated kraft papers were further hot-pressed (9 min, 130 °C, 20 bar) onto birch plywood to form an overlaid plywood.

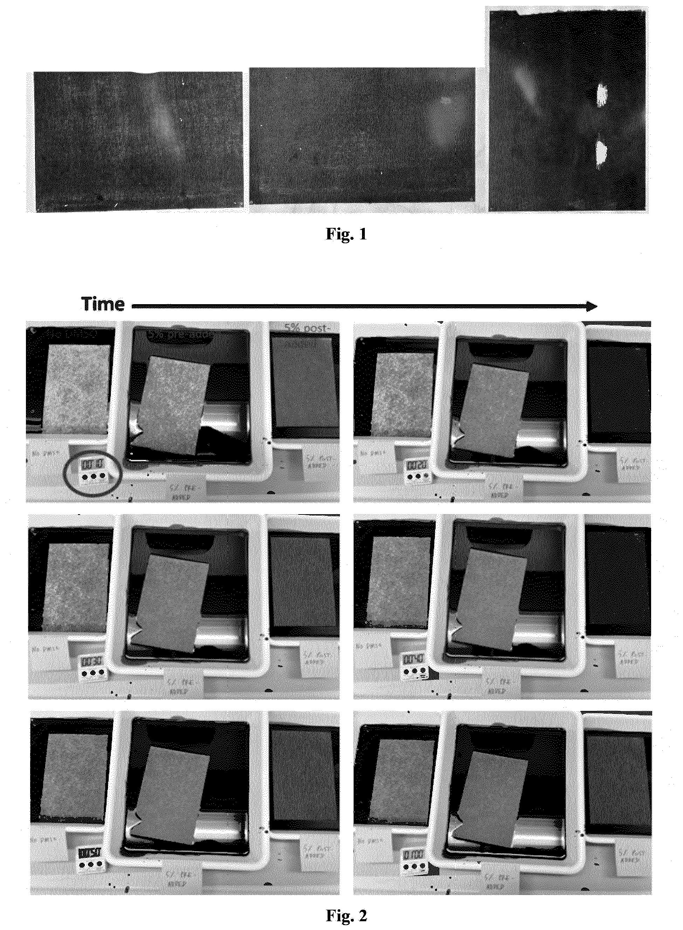

Figure 1 (reference left, Example 2 middle, Example 1 right) shows photos of the overlaid plywoods. The reference overlaid plywood is shown on the left of Figure 1. There can be seen light stripes caused by imperfect saturation of the paper, which remained even though the wetting time was more than 15 minutes. These failures caused by a local lack of resin on the surface of the paper leads to poor appearance and also remarkably strong variation in alkali resistance of the paper. Further, an ox-eye test was used to check if the overlay was fully cured by exposing it to 1 % NaOH solution for two hours. The ox-eye test showed that the reference overlay was not fully cured, this was the case even after 16 minutes hot pressing.

The overlaid plywood comprising the kraft paper impregnated with the resin mixture of Example 2 (post-added DMSO) is shown in the middle of Figure 1, and the overlaid plywood comprising the kraft paper impregnated with the resin mixture of Example 1 (pre-added DMSO) is shown on the right of Figure 1. There are markedly fewer light stripes in the middle sample and even fewer in the right sample, i.e. use of DMSO provides a much more uniform and even coating of the paper. Good alkali resistance was observed for both samples in the ox-eye test.

Thus, a conclusion is made that the resin mixture of the present invention leads to more perfect dissolution of the relatively large lignin polymer particles and evidently also lignin-phenol-formaldehyde clusters that otherwise block the pores of the paper preventing good impregnation.

### Example 4: Wetting time analysis

A so-called boat test was carried out for the three resins similar to the resins of Example 3: reference LPF, post-added DMSO LPF and pre-added DMSO LPF.

The boat test is a test of resin penetration time into a flat substrate, in which test a paper sample is set to float on the surface of the resin. The time it takes for the resin to saturate through the paper is an indication of the penetration performance of the resin. Figure 2 shows a series of tests carried out to demonstrate the effect of DMSO on wetting. Here we used a ca. 80 g/m² kraft paper as our substrate. In each photo, the left sample is tested with the reference resin, the middle with the pre-added DMSO resin and the right with the post-added DMSO resin. The time that the papers have been in contact with the resin is shown by the clock in the pictures (min:sec) (the time passed in the photos, from left to right and row by row are: 10 seconds, 20 seconds, 30 seconds, 40 seconds, 50 seconds and 1 minute). As can be seen from the photos, the fastest wetting is achieved with post-added DMSO, but significant improvements compared to the reference are also achieved with pre-added DMSO.

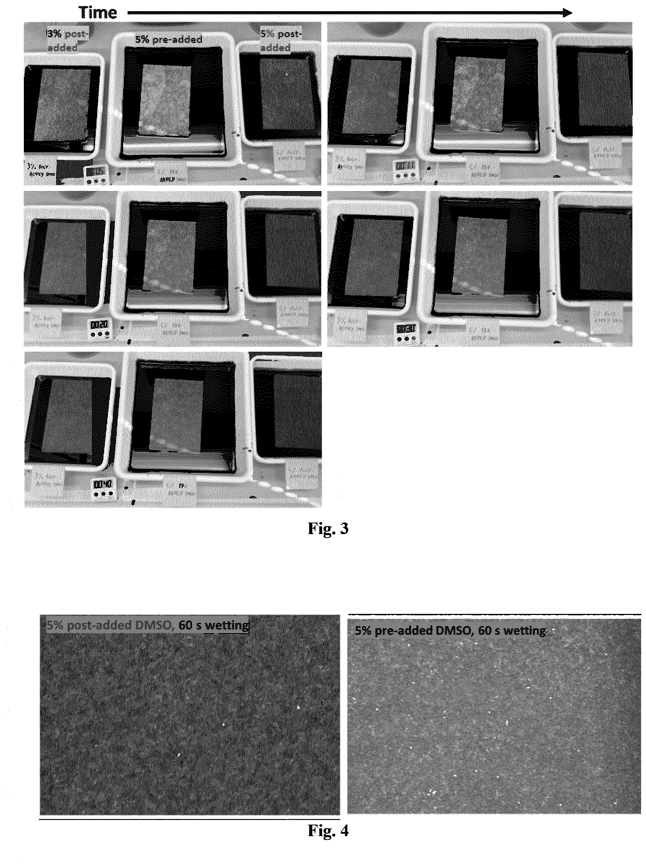

Furthermore, the effect of DMSO concentration was investigated. The photos in Figure 3 show the wetting of kraft paper (ca. 80 g/m²) with resins comprising 3 % and 5% DMSO. In each photo, the left sample is a 3% post-added DMSO resin (produced similarly to the 5% sample of Example 2, except less DMSO is added), the middle sample is a 5% pre-added DMSO resin, and the right sample is a 5 % post-added DMSO resin. The time during which the papers have been in contact with the resin is shown by the clock in the pictures (min:sec). The time passed in the photos, from left to right and row by row are: 5 seconds, 11 seconds, 20 seconds, 30 seconds and 40 seconds).

Based on the results, in case of the pre-added DMSO there seems to be some local unevenness in the quality of the paper probably due to slightly lower wetting time on the left side of the paper, but it seems that the wetting rate with 3 % post-added DMSO is nearly equivalent to that with 5 % pre-added DMSO. Best wetting is achieved with 5 % post-added DMSO.

Figure 4 shows a closer look of the surfaces of the wetted papers. It can be seen that with 5 % pre-added DMSO, the paper exhibits an even, lighter grey colour as opposed to the more variegated, darker appearance with 5 % post-added DMSO. Similar results were seen with the 3 % post-addition. Thus, it can be concluded that pre-added DMSO provides a slightly more uniform spreading of the resin in the paper, whereas the post-added DMSO impregnates faster. It can also be concluded that the resin mixture with 5 % DMSO impregnates slightly faster than the resin mixture with 3 % DMSO.

### Example 5: Overlaid plywood

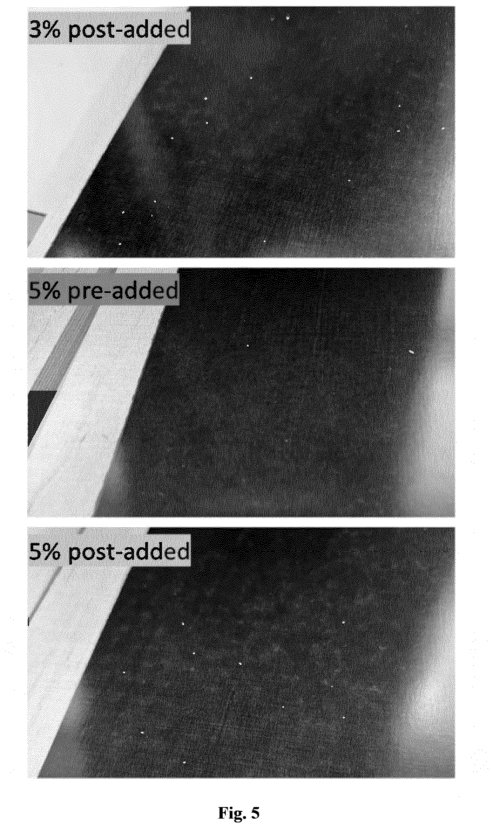

The impregnated kraft papers produced similar to Example 4 were applied onto the surface of plywood. Thus, the impregnated kraft papers were hot-pressed (at 130 °C for about 7 minutes) onto birch plywood, and pictures were taken from the surface. Figure 5a shows the resin containing 3 % of post-added DMSO, Figure 5 bshows the resin containing 5 % of pre-added DMSO and Figure 5c shows a resin containing 5 % of post-added DMSO. As in Figure 4, taken from wet but not dried papers, also in the final product (overlaid plywood), it seems that post-addition causes leopard-like surface whereas pre-addition leads to more even colour.

### Example 6: Comparison of different solvents

Effect of different solvents were also investigated. There were produced seven resin mixture samples according to Example 2 (except addition of DMSO was only made to one of the samples), i.e. different solvent were post-added to a ready-made LPF resin or solvent was not added at all (the reference). Thus, reference sample was produced without a solvent and five other samples were produced by replacing the DMSO with another solvent. The amount of solvent in each sample comprising a solvent was 5 wt.%. See the compositions of the samples in Table 1, the amounts are given in grams. DEG refers to diethylene glycol and MEG refers to monoethylene glycol.

**Table 1. Compositions of the samples, the amounts are given in grams.**

| | Reference | Sample 1 | Sample 2 | Sample 3 | Sample 4 | Sample 5 | Sample 6 |
|---|---|---|---|---|---|---|---|
| LPF resin | 400 | 380 | 380 | 380 | 380 | 380 | 380 |
| DMSO | - | 20 | - | - | - | - | - |
| DEG | - | - | 20 | - | - | - | - |
| MEG | - | - | - | 20 | - | - | - |
| Methanol | - | - | - | - | 20 | - | - |
| Ethanol | - | - | - | - | - | 20 | - |
| Glycerol | - | - | - | - | - | - | 20 |
| Total | 400 | 400 | 400 | 400 | 400 | 400 | 400 |

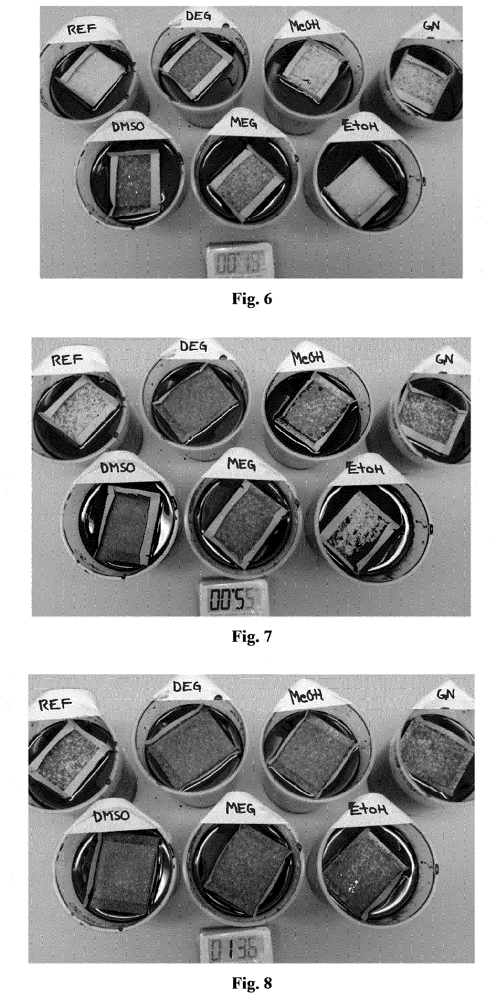

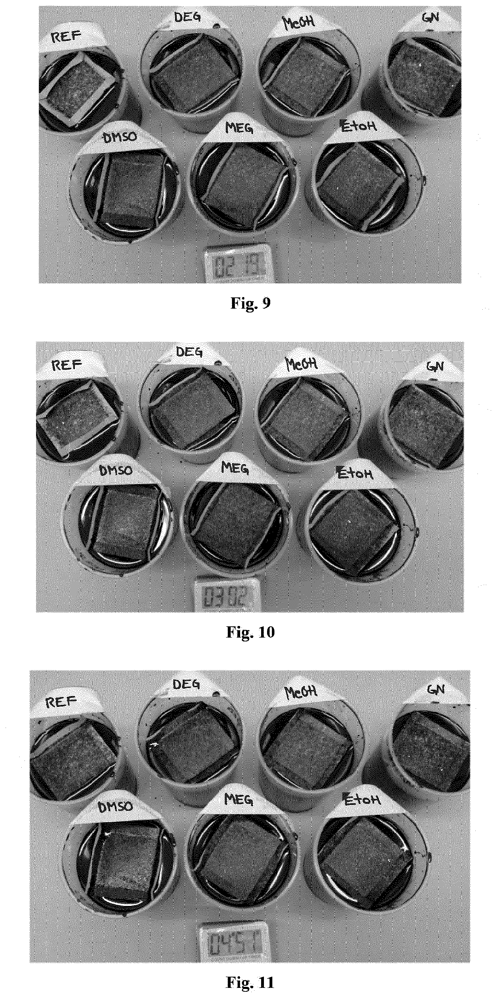

Boat test (in total five parallel tests) was performed for each sample by impregnating the resin mixture samples (after being kept in a refrigerator for 2 months) into a kraft paper (ca. 80 g/m²). Follow-up was ended as five minutes was passed. The results of the boat test (i.e. times that it took the papers to be fully impregnated) are shown in Table 2, and photos taken during the test are shown in Figures 6 to 11. Time that papers have been in contact with the resin is shown in the clock in the pictures (min:sec) (the time passed in the photos from 6 to 11 being 19 seconds, 55 second, 1 minute 36 seconds, 2 minutes 19 seconds, 3 minutes 2 second and 4 minutes 51 seconds). There is some variation in the results in each sample, this may be caused for example by waiting time of the resin mixture between mixing and impregnation or local variation of paper quality.

**Table 2. Boat test results, the results are given in seconds.**

| | Reference | Sample 1 | Sample 2 | Sample 3 | Sample 4 | Sample 5 | Sample 6 |
|---|---|---|---|---|---|---|---|
| Test 1 | > 300 | 105 | 180 | 210 | > 300 | > 300 | > 300 |
| Test 2 | > 300 | 135 | 180 | 270 | > 300 | > 300 | > 300 |
| Test 3 | > 300 | 210 | 270 | > 300 | > 300 | > 300 | > 300 |
| Test 4 | > 300 | 180 | 240 | > 300 | > 300 | > 300 | > 300 |
| Test 5 | > 300 | 240 | 240 | 300 | > 300 | > 300 | > 300 |
| Average | > 300 | 174 | 222 | 260 | > 300 | > 300 | > 300 |

In the table 2 above, >300 s means that wetting did not occur during that time, at which point measurement was stopped.

From the results it can be seen that the impregnation time with the reference sample and samples 4 to 6 (ethanol, methanol and glycerol solvent) was in all boat test over five minutes, i.e. very long. The impregnation was significantly fastest with sample 1 having DMSO as a solvent, the average impregnation time being 174 seconds. Impregnation was also completed in less than five minutes with most of the samples with DEG or MEG as a solvent, however the average impregnation times were still at least 45 seconds longer than with DMSO, which is a significant difference. Further, the faster impregnation and more even dispersion with DMSO can be seen from the figures 6 to 11. Overall sample 1 provides best coating on a kraft paper.

### Example 7: Comparison of different solvents

Effect of different solvents were further investigated. There were produced four resin mixture samples according to Example 2 (except the solvent was varied) i.e. different solvents/ solvent mixtures were post-added to a ready-made LPF resin. Reference sample was produced without a solvent. The amount of solvent/ solvent mixture in each sample was 5 wt.%. The tested solvents/solvent mixtures were DMSO 5%, mixture of DMSO 4% and Dowanol^{™} PM (1-methoxy-2-propanol )1 %, mixture of DMSO 2.5% and Dowanol^{™} PM 2.5 %, and Dowanol^{™} PM 5%. See the compositions of the samples in Table 3, the amounts are given in grams.

**Table 3. Compositions of the samples, the amounts are given in grams.**

| | Reference | Sample 1 | Sample 2 | Sample 3 | Sample 4 |
|---|---|---|---|---|---|
| LPF resin | 400 | 380 | 380 | 380 | 380 |
| DMSO | - | 20 | 16 | 10 | - |
| Dowanol^{™} PM | - | - | 4 | 10 | 20 |
| Total | 400 | 400 | 400 | 400 | 400 |

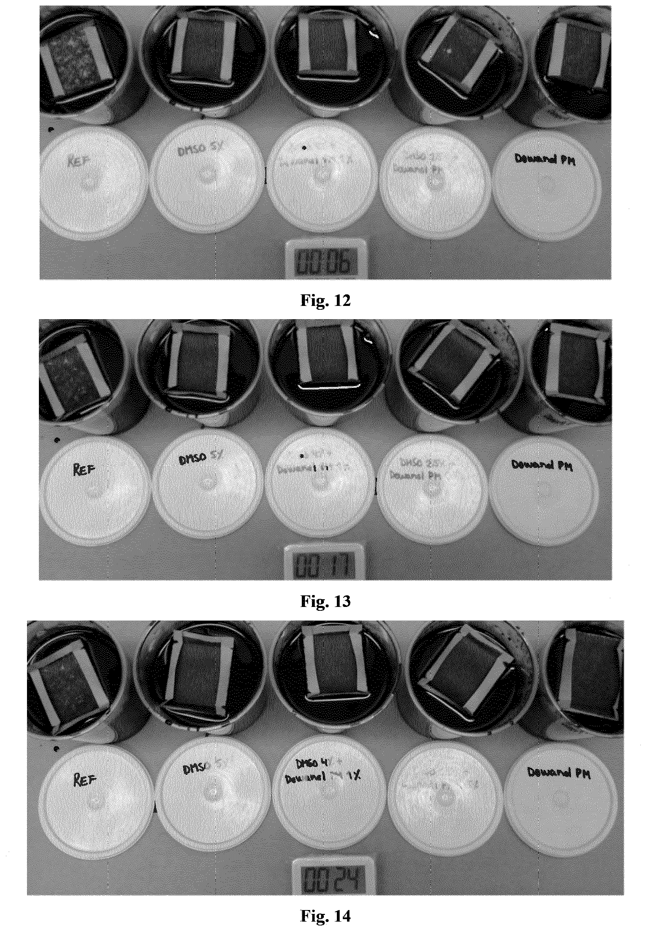

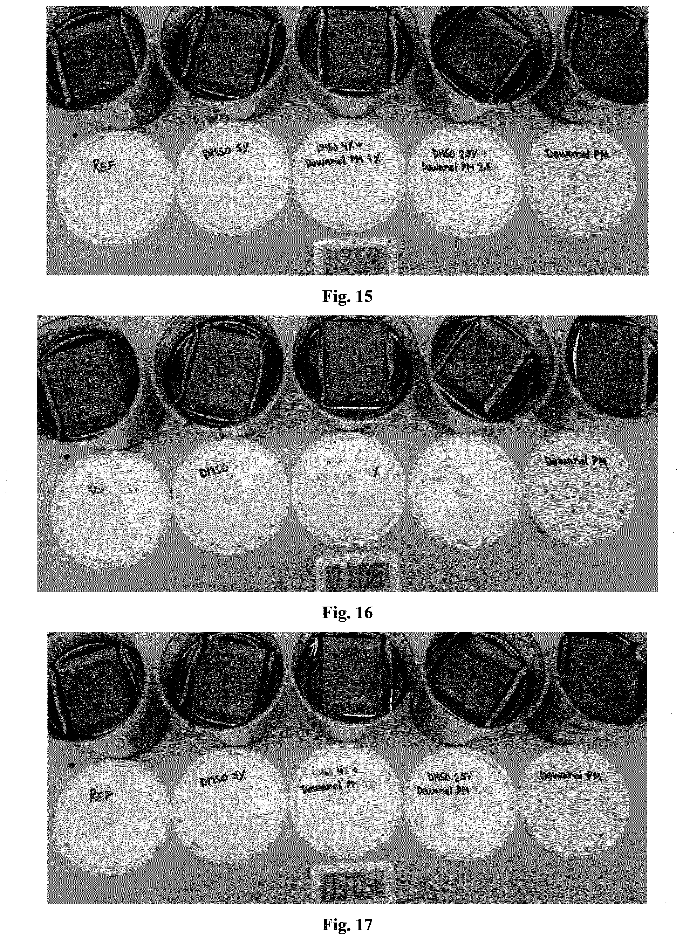

Boat test (in total five parallel tests) was performed for each sample by impregnating the fresh resin mixture samples into a kraft paper (ca. 80 g/m²). Follow-up was ended as five minutes was passed. The results of the boat test (i.e. times that it took the papers to be fully impregnated) are shown in Table 4, and photos taken during the test are shown in Figures 12 to 17. Time that papers have been in contact with the resin is shown in the clock in the pictures (min:sec) (the time passed in the photos from 12 to 17 being 6 seconds, 17 seconds, 42 seconds, 1 minute 6 seconds, 1 minute 54 seconds and 3 minutes 1 second).

**Table 4. Boat test results, the results are given in seconds.**

| | Reference | Sample 1 | Sample 2 | Sample 3 | Sample 4 |
|---|---|---|---|---|---|
| Test 1 | > 300 | 5 | 5 | 5 | 15 |
| Test 2 | > 300 | 5 | 5 | 5 | 15 |
| Test 3 | 180 | 5 | 5 | 5 | 15 |
| Test 4 | 120 | 5 | 5 | 5 | 10 |
| Test 5 | > 300 | 5 | 5 | 5 | 15 |
| Average | > 300 | 5 | 5 | 5 | 14 |

From the results it can be seen that the impregnation time with the solvents of the present invention was significantly lower (seconds versus more than 5 minutes) than with the reference sample. Fastest impregnation time was achieved with the resins comprising DMSO but also the resin comprising only Dowanol^{™} PM as a solvent impregnated the paper effectively. Further, the faster impregnation and more even dispersion with the solvent(s) according to the present invention can be seen from the figures 12 to 17.

### Example 8: Different kraft papers

Effect of different kraft papers were investigated. There were produced a resin mixture according to Example 2, i.e. LPF resin with post-added DMSO (5%).

Boat test was performed with the resin mixture of the present invention and with the reference resin (no solvent used) for two different kraft papers, a film kraft paper (a kraft paper used in manufacturing of overlay films) (ca. 78 gsm), and a lamination kraft paper (a kraft paper used in manufacturing laminates) (ca. 155 gsm) by impregnating the resin mixtures into the kraft papers. Follow-up was ended as five minutes was passed. During the five minutes follow-up period, the resin mixture of the present invention was fully impregnated the kraft paper having a grammage of 78 gsm. Other samples were not fully (>99 %) impregnated, this may be partly because there might be some minor spots in papers that do not just absorb the resin, basically it can be said that the resin mixture of the present invention was also fully impregnated into the lamination kraft paper. Overall, a clear difference can be seen in the results between the resin mixture of the present invention and the reference resin, in case of both film kraft paper and lamination kraft paper.

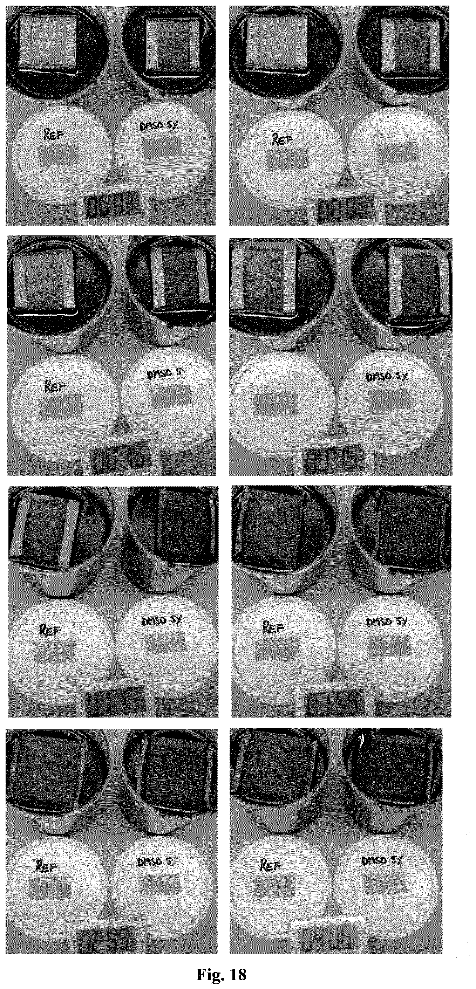

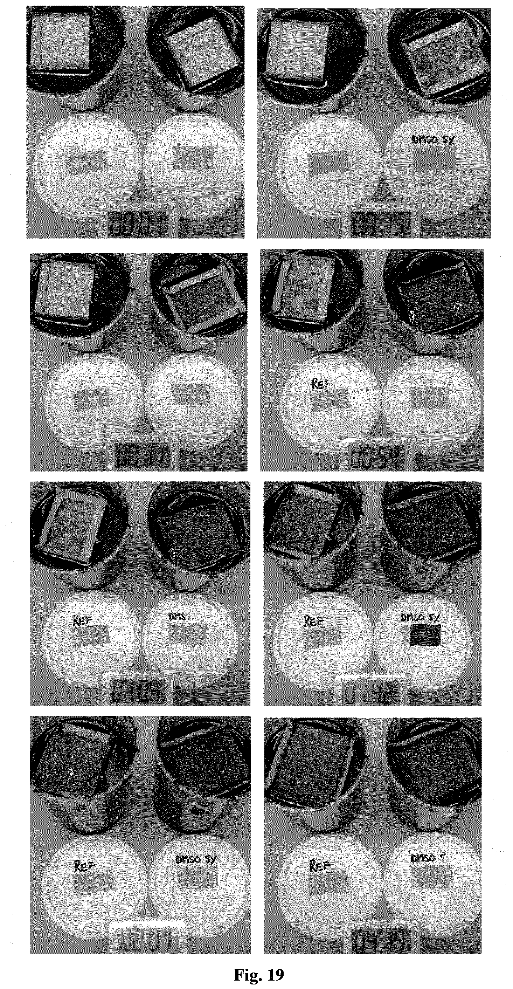

The results of the boat test are shown in Figures 18 (film kraft paper) and 19 (lamination kraft paper). In both Figures the left sample is the reference and the right sample is the sample of the present invention. Time that papers have been in contact with the resin is shown in the clock in the pictures (min: sec). The times passed in the photos of Figure 18 being 3 seconds, 5 seconds, 15 seconds, 45 seconds, 1 minute 18 seconds, 1 minute 59 seconds, 2 minutes 59 seconds and 4 minutes 6 seconds). Whereas the times passed in the photos of Figure 19 being 7 seconds, 19 seconds, 31 seconds, 54 seconds, 1 minute 4 seconds, 1 minute 42 seconds, 2 minutes 01 seconds and 4 minutes 18 seconds).

The results are also numerically shown in Table 5. Numerical follow up was also made to a film kraft paper with the grammage ca. 80 gsm and to a lamination kraft paper with the grammage of ca. 217 gsm. These results indicate the time at which the paper was wetted to the point after which no more wetting occurred (i.e. not waiting wetting of the small spots that most likely never wet without external pressure). Clear difference in the wetting time performance can be seen between the reference and the resin of the present invention. Table 5. Boat test results, the results are given in seconds. R refers to the reference resin and I refers to the resin mixture of the present invention.

| | R | I | R | I | R | I | R | I |
|---|---|---|---|---|---|---|---|---|
| | 78gsm | 78gsm | 80gsm | 80gsm | 155gsm | 155gsm | 155gsm | 155gsm |
| Test 1 | > 300 | 10 | > 300 | 5 | > 300 | 65 | > 300 | 78 |
| Test 2 | > 300 | 10 | > 300 | 5 | > 300 | 82 | > 300 | 112 |
| Test 3 | > 300 | 15 | > 300 | 5 | > 300 | 55 | > 300 | 85 |
| Test 4 | > 300 | 16 | > 300 | 5 | > 300 | 67 | - | - |
| Average | > 300 | 13 | > 300 | 5 | > 300 | 67 | > 300 | 92 |

### Industrial Applicability

The present method can be generally used for impregnating kraft-paper with lignin-phenol-formaldeyde resin, and especially for impregnating kraft-paper to be used in overlaid plywood.

## Claims

1. An impregnation resin mixture comprising a lignin-phenol-formaldehyde (LPF) resin and 1 to 6 wt.% of dimethyl sulfoxide (DMSO) as solvent, calculated from the total weight of the resin mixture.

2. The impregnation resin mixture according to claim 1, wherein the LPF-resin comprises at least 10 wt.%, preferably 20 to 70 wt.%, more preferably 30 to 50 wt.%, of lignin, calculated from the total dry weight of lignin and phenol in the LPF-resin.

3. The impregnation resin mixture according to any of the preceding claims, wherein the resin mixture comprises 2 to 5 wt.% of DMSO, calculated from the total weight of the resin mixture.

4. The impregnation resin mixture according to any of the preceding claims, wherein the resin mixture further comprises an additive(s), preferably selected from the group of levelling agent, release agent, defoamer /antifoaming agent, antiblocking agent, dye, pigment, accelerator, plasticizer, surfactant, wetting agent, hydrophobic agent, and mixtures thereof.

5. A method for impregnating kraft paper with a resin mixture, the method comprising the steps of
- providing a resin mixture, and
- impregnating a kraft paper with the resin mixture,
wherein the resin mixture comprises a lignin-phenol-formaldehyde (LPF) resin and 1 to 6 wt.% of dimethyl sulfoxide (DMSO) as solvent, calculated from the total weight of the resin mixture.

6. The method according to claim 5, wherein lignin and phenol are polymerized with formaldehyde in the presence of the solvent, i.e. DMSO.

7. The method according to claim 5 or 6, wherein the resin mixture is provided by first mixing together water, lignin, phenol, the solvent, i.e. DMSO, and a catalyst, such as NaOH, and then adding formaldehyde thereto.

8. The method according to claim 6, wherein the solvent, i.e. DMSO, is added before, during or after addition of formaldehyde but before the temperature of the mixture is raised above 45°C.

9. The method according to claim 6, wherein the solvent, i.e. DMSO, is added during the polymerization reaction of lignin and phenol with formaldehyde.

10. The method according to claim 5, wherein the solvent, i.e. DMSO, is mixed to a ready-made, i.e. polymerized, LPF-resin.

11. A method for manufacturing an overlaid plywood, the method comprising the steps of
- providing the kraft paper impregnated with a resin mixture by the method according to any of claims 5 to 10,
- providing a plywood, and
- pressing the impregnated kraft paper on the surface of the plywood.

12. A kraft paper impregnated with the resin mixture according to any of claims 1 to 4 or obtained by the method according to any of claims 5 to 10.

13. An overlaid plywood comprising a plywood having the impregnated kraft paper according to claim 12 being pressed on the surface of the plywood or obtained by the method of claim 11.

14. A high-pressure laminate (HPL) comprising at least two sheets of kraft paper according to claim 12 being pressed together.

15. A continuously pressed laminate (CPL) comprising at least two sheets of kraft paper according to claim 12 being pressed together.

16. Use of the resin mixture according to any of claims 1 to 4 in adhesive film or in filter medium as a resin binder.
